# EUROPÄISCHE PATENTSCHRIFT

(11) **EP 3 327 261 B1**
(45) Veröffentlichungstag und Bekanntmachung des Hinweises auf die Patenterteilung: **03.06.2020**
(21) Anmeldenummer: 17200491.3
(22) Anmeldetag: 08.11.2017
(51) Int. Cl.: F01N 1/00, F01N 13/14

(54) **ABGASBEHANDLUNGSANORDNUNG**
EXHAUST GAS TREATMENT ASSEMBLY
DISPOSITIF DE TRAITEMENT DE GAZ D'ÉCHAPPEMENT

(30) Priorität: 25.11.2016 DE 102016122769
(43) Veröffentlichungstag der Anmeldung: 30.05.2018
(73) Patentinhaber: Eberspächer Exhaust Technology GmbH & Co. KG, 66539 Neunkirchen (DE)
(72) Erfinder: Kast, Peter, 73732 Esslingen (DE); Samnick, Jean Philippe, 78390 Bois d'Arcy (FR); Hossepied, Charles, 92400 Courbevoie (FR); Cazeneuve, Laurent, 78690 Saint Rémy l'Honoré (FR)
(74) Vertreter: Ruttensperger Lachnit Trossin Gomoll

(56) Entgegenhaltungen:
- EP-A1- 1 736 645
- EP-A1- 2 119 885
- EP-A1- 2 233 709
- EP-A2- 1 857 651
- WO-A1-2004/063540
- WO-A1-2013/102468
- WO-A1-2014/167353
- DE-A1-102014 108 877
- JP-A- 2008 215 286

## Beschreibung

Die vorliegende Erfindung betrifft eine Abgasbehandlungsanordnung, die in einer Abgasanlage einer Brennkraftmaschine eines Fahrzeugs eingesetzt werden kann, um den Schadstoffanteil in dem von der Brennkraftmaschine ausgestoßenen Abgas zu mindern. Eine derartige Abgasbehandlungsanordnung umfasst eine Abgasbehandlungseinheit, die beispielsweise eine Katalysatorbaugruppe oder/und eine Partikelfilterbaugruppe umfassen kann.

Bei derartigen Abgasbehandlungsanordnungen besteht grundsätzlich ein Problem darin, dass für eine immer bessere Abgasbehandlung das Behandlungsvolumen, also insbesondere das Volumen der Abgasbehandlungseinheit, vergrößert werden soll, während andererseits der in Fahrzeugen zur Verfügung stehende Bauraum für derartige Abgasbehandlungsanordnungen abnimmt.

Eine Abgasbehandlungsanordnung gemäß dem Oberbegriff des Anspruchs 1 ist aus der EP 2 119 885 A1 bekannt.

Es ist die Aufgabe der vorliegenden Erfindung, eine Abgasbehandlungsanordnung, insbesondere für eine Abgasanlage einer Brennkraftmaschine eines Fahrzeugs, bereitzustellen, welche bei kompakter Bauart ein großes Behandlungsvolumen für diese durchströmendes Abgas bereitstellt.

Erfindungsgemäß wird diese Aufgabe gelöst durch eine Abgasbehandlungsanordnung, insbesondere für eine Abgasanlage einer Brennkraftmaschine eines Fahrzeugs, gemäß Anspruch 1. Diese Abgasbehandlungsanordnung umfasst ein in Richtung einer Gehäuselängsachse langgestrecktes Gehäuse, eine in dem Gehäuse angeordnete Abgasbehandlungseinheit sowie wenigstens eine mit einem axial offenen axialen Endbereich des Gehäuses in Strömungsverbindung stehende erste Abgasführungsanordnung, wobei die erste Abgasführungsanordnung einen entlang einer Außenseite des Gehäuses führenden ersten Strömungswegbereich sowie einen den ersten Strömungswegbereich mit dem axial offenen axialen Endbereich des Gehäuses verbindenden zweiten Strömungswegbereich bereitstellt, wobei der erste Strömungswegbereich einen im axialen Bereich des axial offenen axialen Endbereichs des Gehäuses angeordneten ersten axialen Endbereich aufweist.

Da bei dem erfindungsgemäßen Aufbau einer Abgasbehandlungsanordnung das Abgas zu oder von der im Gehäuse angeordneten Abgasbehandlungseinheit bereichsweise entlang der Außenseite des Gehäuses geführt wird, kann das im Inneren des Gehäuses bereitgestellte Volumen im Wesentlichen vollständig für die Abgasbehandlungseinheit genutzt werden.

Eine kompakte Bauart wird dadurch begünstigt, dass der erste Strömungswegbereich im Wesentlichen in Richtung der Gehäuselängsachse entlang der Außenseite des Gehäuses geführt ist, oder/und dass der erste Strömungswegbereich einen axial im Bereich eines anderen axialen Endbereichs des Gehäuses angeordneten zweiten axialen Endbereich aufweist.

Um mit einfachen Mitteln die Führung von Abgas entlang der Außenseite des Gehäuses erreichen zu können, wird vorgeschlagen, dass die Abgasführungsanordnung ein an der Außenseite des Gehäuses angeordnetes erstes Abgasführungselement umfasst, wobei der erste Strömungswegbereich durch das erste Abgasführungselement wenigstens bereichsweise begrenzt ist. Es ist hier darauf hinzuweisen, dass das Anordnen eines Abgasführungselements an der Außenseite des Gehäuses nicht notwendigerweise bedeutet, dass dieses Abgasführungselement am Gehäuse selbst festgelegt ist oder mit diesem in Kontakt steht.

Bei einer besonders kompakten Bauart kann vorgesehen sein, dass das erste Abgasführungselement an der Außenseite des Gehäuses festgelegt ist, und dass der erste Strömungswegbereich im Wesentlichen durch das erste Abgasführungselement und das Gehäuse begrenzt ist.

Bei einer insbesondere hinsichtlich der thermischen Belastung des Gehäuses und der darin angeordneten Abgasbehandlungseinheit vorteilhaften Ausgestaltungsvariante kann an der Außenseite des Gehäuses ein zweites Abgasführungselement festgelegt sein, wobei das erste Abgasführungselement an dem zweiten Abgasführungselement oder/und der Außenseite des Gehäuses festgelegt ist und der erste Strömungswegbereich im Wesentlichen durch das erste Abgasführungselement und das zweite Abgasführungselement begrenzt ist.

Um in einfacher und kompakter Weise eine Strömungsverbindung vom ersten Strömungswegbereich in das Gehäuse bereitstellen zu können, ist ein den axial offenen axialen Endbereich des Gehäuses abschließendes und den zweiten Strömungswegbereich wenigstens bereichsweise begrenzendes, haubenartiges drittes Strömungsführungselement vorgesehen.

Zur Verbindung der beiden Strömungswegbereiche miteinander steht das dritte Strömungsführungselement in einem Umfangsbereich des Gehäuses zur Verbindung des zweiten Strömungswegbereichs mit dem ersten axialen Endbereich des ersten Strömungswegbereichs nach radial außen über das Gehäuse hervor und überdeckt das erste Abgasführungselement und den axial offenen axialen Endbereich des Gehäuses radial.

Zur Verbindung der Abgasbehandlungsanordnung mit daran anschließenden Systembereichen einer Abgasanlage wird vorgeschlagen, dass ein im zweiten axialen Endbereich des ersten Strömungswegbereichs in den ersten Strömungswegbereich einmündendes Strömungsführungsrohr vorgesehen ist.

Um eine Durchströmbarkeit des Gehäuses zu gewährleisten, kann vorgesehen sein, dass das Gehäuse zwei axial offene axiale Endbereiche aufweist, und dass in Zuordnung zu wenigstens einem der beiden axialen Endbereiche des Gehäuses eine mit diesem axialen Endbereich in Strömungsverbindung stehende erste Abgasführungsanordnung vorgesehen ist.

In Zuordnung zu einem der beiden axialen Endbereiche des Gehäuses kann eine zweite Abgasführungsanordnung vorgesehen sein, wobei die zweite Abgasführungsanordnung ein diesen axialen Endbereich des Gehäuses abschließendes, vorzugsweise im Wesentlichen trichterartiges viertes Strömungsführungselement umfassen kann. Dabei kann beispielsweise die erste Abgasführungsanordnung stromaufwärts der Abgasbehandlungseinheit angeordnet sein, und die zweite Abgasführungsanordnung kann stromabwärts der Abgasbehandlungseinheit angeordnet sein. Die Strömungsrichtung kann auch umgekehrt sein, so dass die erste Abgasführungsanordnung stromabwärts der Abgasbehandlungseinheit angeordnet ist und die zweite Abgasführungsanordnung stromaufwärts der Abgasbehandlungseinheit angeordnet ist.

Für einen hinsichtlich der Durchströmung des Gehäuses im Wesentlichen symmetrischen Aufbau wird vorgeschlagen, dass in Zuordnung zu jedem der axialen Endbereiche des Gehäuses jeweils eine mit diesem in Strömungsverbindung stehende erste Abgasführungsanordnung vorgesehen ist.

Um eine effiziente Abgasreinigung bewirken zu können, wird ferner vorgeschlagen, dass die Abgasbehandlungseinheit eine Katalysatorbaugruppe oder/und eine Partikelfilterbaugruppe umfasst.

Die Erfindung betrifft ferner eine Abgasanlage für eine Brennkraftmaschine eines Fahrzeugs, umfassend eine in einer Abgasströmungsrichtung durchströmbare erfindungsgemäße Abgasbehandlungsanordnung.

Die vorliegende Erfindung wird nachfolgend mit Bezug auf die beiliegenden Figuren detailliert beschrieben. Es zeigt:
- Fig. 1: eine Seitenansicht einer Abgasbehandlungsanordnung;
- Fig. 2: eine Darstellung der Abgasbehandlungsanordnung der Fig. 1, geschnitten längs einer Linie II-II in Fig. 1;
- Fig. 3: eine der Fig. 1 entsprechende Ansicht einer alternativen Ausgestaltungsart;
- Fig. 4: eine Darstellung der Abgasbehandlungsanordnung der Fig. 2, geschnitten längs einer Linie IV-IV in Fig. 3.

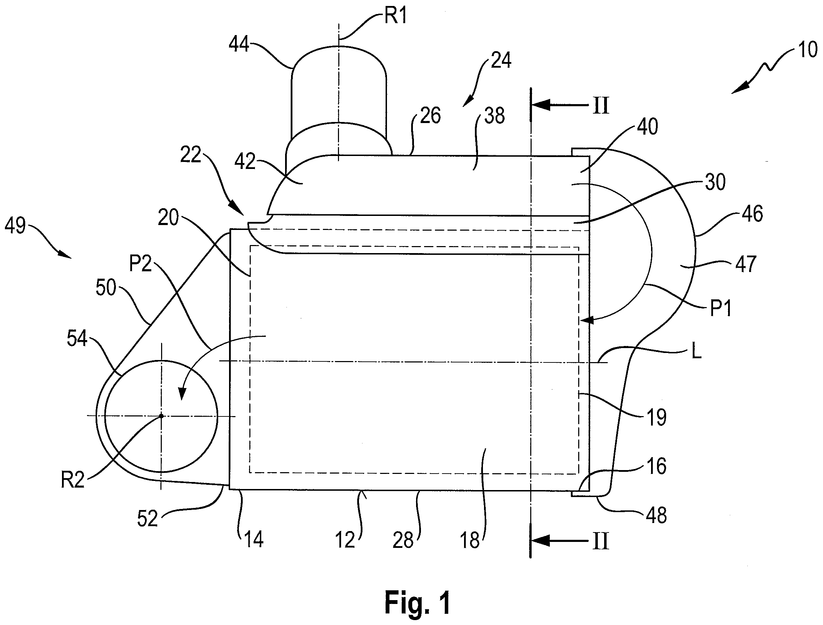

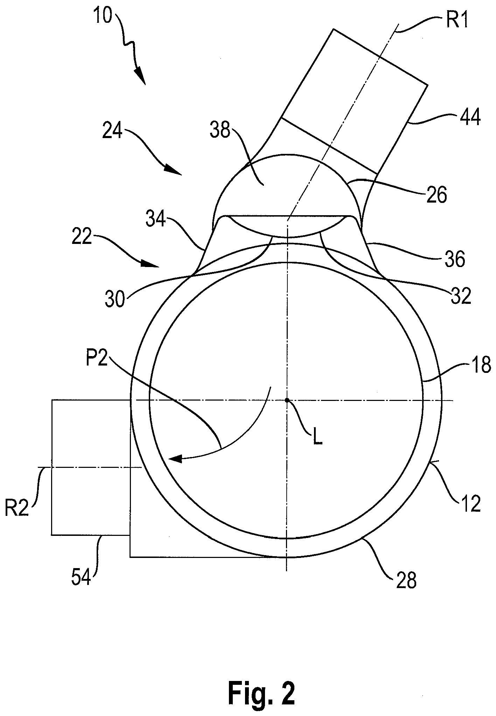

Die Fig. 1 und 2 zeigen eine erste Ausgestaltungsform einer allgemein mit 10 bezeichneten und in eine Abgasanlage einer Brennkraftmaschine eines Fahrzeugs integrierbare Abgasbehandlungsanordnung. Die Abgasbehandlungsanordnung 10 umfasst ein in Richtung einer Gehäuselängsachse L langgestrecktes, rohrartiges, im Wesentlichen zylindrisches Gehäuse 12. An seinen beiden axialen Endbereichen 14, 16 ist das Gehäuse 12 in Richtung der Gehäuselängsachse L grundsätzlich axial offen. Im Inneren des Gehäuses 12 ist eine allgemein mit 18 bezeichnete Abgasbehandlungseinheit angeordnet, welche beispielsweise eine Katalysatorbaugruppe oder/und eine Partikelfilterbaugruppe umfassen kann. Die Abgasbehandlungseinheit 18 kann beispielsweise unter Zwischenlagerung einer diese an der Außenseite umgebenden, aus Fasermaterial aufgebauten Matte in dem Gehäuse 12 gehalten sein, so dass eine Anströmseite 19 der Abgasbehandlungseinheit 18 im Bereich des axialen Endbereichs 16 des Gehäuses 12 liegt und eine Abströmseite 20 im Bereich des axialen Endbereichs 14 des Gehäuses 12 positioniert ist.

An einer Außenseite 22 des Gehäuses 12 ist eine allgemein mit 24 bezeichnete erste Abgasführungsanordnung vorgesehen, über welche von einer Brennkraftmaschine ausgestoßenes Abgas in das Innere des Gehäuses 12 eingeleitet wird. Die erste Abgasführungsanordnung 24 umfasst ein an der Außenseite 22 des Gehäuses 12 angeordnetes, im Wesentlichen in der Richtung der Gehäuselängsachse L sich erstreckendes, halbschalenartiges erstes Abgasführungselement 26. Die erste Abgasführungsanordnung 24 umfasst ferner ein an der Außenseite 22 des Gehäuses 12 angeordnetes und an eine Außenumfangsfläche 28 des Gehäuses 12 vorzugsweise materialschlüssig, beispielsweise durch Verschweißung, angebundenes zweites Abgasführungselement 30. Das zweite Abgasführungselement 30 weist in einem in Umfangsrichtung zentralen Bereich einen konkav bzw. schalenartig gewölbten Bereich 32 und in Umfangsrichtung daran anschließend jeweils Schenkelbereiche 34, 36 auf, mit welchen dieses an der Außenumfangsfläche 28 des Gehäuses 12 festgelegt ist. An diesen Schenkelbereichen 34, 36 ist das erste Abgasführungselement 26 vorzugsweise materialschlüssig, beispielsweise durch Verschweißung, festgelegt, so dass die beiden Abgasführungselement 26, 30 zusammen einen entlang der Außenseite 22 im Wesentlichen in Richtung der Gehäuselängsachse L sich erstreckenden ersten Strömungswegbereich 38 begrenzen. Ein erster axialer Endbereich 40 des ersten Strömungswegbereichs 38 liegt axial im Bereich des axialen Endbereichs 16 des Gehäuses 12. Ein zweiter axialer Endbereich 42 des ersten Strömungswegbereichs 38 liegt axial im Bereich des axialen Endbereichs 14 des Gehäuses 12. Im Bereich dieses zweiten axialen Endbereichs 42 mündet ein Strömungsführungsrohr 44 in den ersten Strömungswegbereich 38 ein, wobei eine Längsachse R1 des Strömungsführungsrohrs 44 beispielsweise im Wesentlichen orthogonal zur Erstreckungsrichtung des ersten Strömungswegbereichs 38 entlang der Außenseite 22 des Gehäuses 12 stehen kann. Alternativ kann die Längsachse R1 auch unter einem von 90° verschiedenen Winkel bezüglich der Erstreckungsrichtung des ersten Strömungswegbereichs 38 angeordneten sein oder derart, dass das Strömungsführungsrohr 44 den Strömungswegbereich 38 axial fortsetzt.

Durch das Bereitstellen der beiden Strömungsführungselemente 26, 30, welche zusammen im Wesentlichen den ersten Strömungswegbereich begrenzen, wird das in Richtung zum Gehäuse 12 geförderte Abgas entlang der Außenseite 22 des Gehäuses 12 ohne wesentlichen thermischen Kontakt mit diesem geleitet, so dass eine übermäßige thermische Belastung der Abgasbehandlungseinheit 18 in diesem Umfangsbereich vermieden werden kann.

Am axialen Endbereich 16 des Gehäuses 12 ist ein im Wesentlichen kappenartig oder haubenartig ausgebildetes drittes Strömungsführungselement 46 angeordnet. Das dritte Strömungsführungselemente 46 überdeckt den axialen Endbereich 16 des Gehäuses 12 und den ersten axialen Endbereich des ersten Strömungswegbereichs 38 bzw. die beiden Strömungsführungselemente 26, 30 in diesem Bereich und stellt somit einen gasdichten Abschluss sowie einen zweiten Strömungswegbereich 47 zur Herstellung einer Strömungsverbindung zwischen dem ersten Strömungswegbereich 38 und dem axial offenen axialen Endbereich 16 des Gehäuses 12 bereit. Wie durch einen Strömungspfeil P1 angedeutet, wird das den ersten Strömungswegbereich 38 durchströmende und diesen an seinem ersten axialen Endbereich 40 verlassende Abgas näherungsweise um 180° umgelenkt, so dass es auf die Anströmseite 19 der Abgasbehandlungsanordnung 18 zu strömt. Das dritte Abgasführungselement 46 kann mit einem das Gehäuse 12 und die beiden Strömungsführungselemente 26, 30 übergreifenden zylindrischen Abschnitt 48 an der Außenseite dieser Bauteile vorzugsweise materialschlüssig, beispielsweise durch Verschweißung, festgelegt sein.

Im Bereich des axialen Endbereichs 14 des Gehäuses 12 ist ein eine zweite Abgasführungsanordnung 49 bereitstellendes viertes Strömungsführungselement 50 am Gehäuse 12 vorzugsweise materialschlüssig, beispielsweise durch Verschweißung, festgelegt. Ein im Wesentlichen zylindrischer Abschnitt 52 des beispielsweise im Wesentlichen haubenartig geformten vierten Strömungsführungselements 50 kann in den axialen Endbereichs 14 des Gehäuses 12 eingesetzt und daran festgelegt sein. Ein Strömungsführungsrohr 54 mündet in das vierte Strömungsführungselement 50 ein, wobei eine Längsachse R2 des Strömungsführungsrohrs 54 zur Richtung der Gehäuselängsachse L näherungsweise orthogonal stehen kann, so dass vorzugsweise die beiden Längsachsen R1, R2 der Strömungsführungsrohre 44, 54 zueinander angewinkelt sind. Das Gehäuse 12 an dessen axialen Endbereich 14 verlassendes Abgas wird im vierten Strömungsführungselement 50, wie durch einen Strömungspfeil P2 angedeutet, näherungsweise um 90° umgelenkt, bevor es in das Strömungsführungsrohr 54 eintritt. Auch das Strömungsführungsrohr 54 könnte derart angeordnet sein, dass eine Umlenkung um einen von 90° verschiedenen Winkel erfolgt oder im Wesentlichen keine Umlenkung erfolgt, so dass das Strömungsführungsrohr 54 die dieses durchströmenden Abgase im Wesentlichen in Richtung der Gehäuselängsachse L weiterleitet.

Mit dem vorangehend beschriebenen Aufbau wird eine kompakte Bauweise der Abgasbehandlungsanordnung 10 erhalten, bei welcher gleichwohl ein vergleichsweise großes Volumen für die Abgasbehandlungseinheit 18 bereitgestellt ist. Die Erstreckungsrichtung der Längsachsen R1, R2 kann einerseits durch entsprechende Ausgestaltung des ersten Strömungsführungselements 26, andererseits durch Auswahl der Positionierung des vierten Strömungsführungselements 50 in großen Winkelbereichen frei gewählt werden, so dass eine Anpassung des Aufbaus an verschiedenste Abgasanlagen leicht möglich ist.

Ferner kann auch in Zuordnung zum axialen Endbereich 14 des Gehäuses 12 eine der ersten Abgasführungsanordnung 24 mit den Strömungsführungselementen 26, 30, 46 entsprechende Anordnung vorgesehen sein. Weiter kann die Strömungsrichtung, in welcher Abgas das Gehäuse 12 und die darin angeordnete Abgasbehandlungseinheit 18 durchströmt, bezüglich der vorangehend beschriebenen Strömungsrichtung umgekehrt sein, so dass Abgas im Bereich des axialen Endbereichs 14 in das Gehäuse 12 eintritt und dieses im Bereich des axialen Endbereichs 16 verlässt.

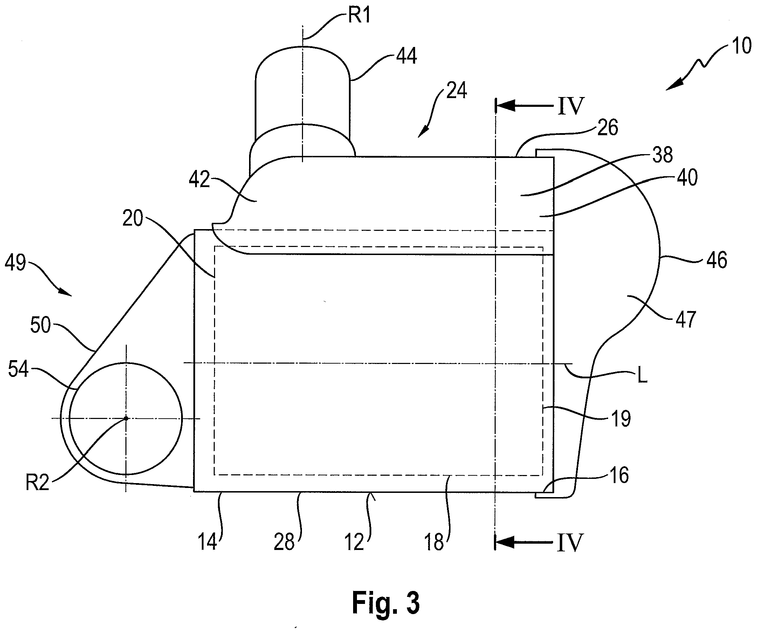

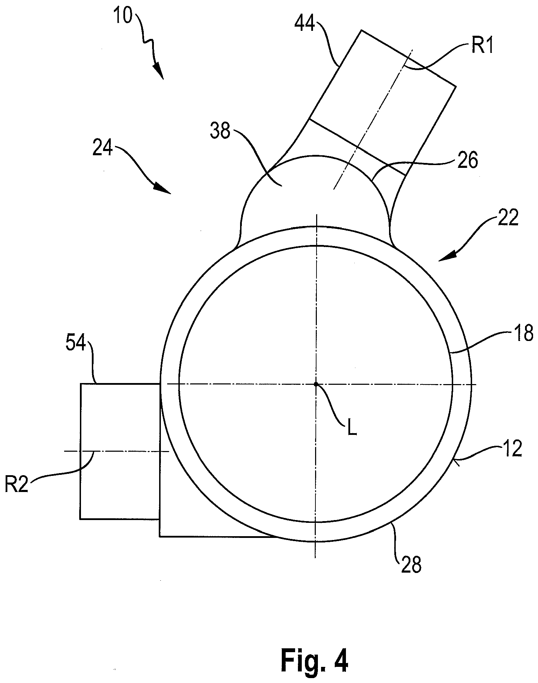

Die in den Fig. 3 und 4 dargestellte Abgasbehandlungsanordnung 10 unterscheidet sich von der vorangehend beschriebenen Abgasbehandlungsanordnung im Wesentlichen dadurch, dass die erste Abgasführungsanordnung 24 nur die beiden Strömungsführungselemente 26, 46 umfasst. Das erste Strömungsführungselement 26 ist, sich entlang der Außenseite 22 des Gehäuses 12 erstreckend, direkt an der Außenumfangsfläche 28 vorzugsweise materialschlüssig, beispielsweise durch Verschweißung, festgelegt, so dass der erste Strömungswegbereich 38 durch das erste Strömungsführungselement 26 und einen Umfangsbereich des Gehäuses 12 begrenzt ist. Somit kann bei geringerer Anzahl an Bauteilen eine noch kompaktere Bauart erreichen

Es ist abschließend darauf hinzuweisen, dass bei der vorangehend beschriebenen Abgasbehandlungsanordnung die Strömungsführungselemente, die Strömungsführungsrohre und das Gehäuse vorzugsweise aus Blechmaterial aufgebaut sein können, was einerseits eine leichte Umformbarkeit, andererseits die Möglichkeit, diese Bauteile durch Materialschluss miteinander zu verbinden, gewährleistet. Gleichzeitig ist bei Aufbau dieser Bauteile aus Blechmaterial die Gefahr einer Beschädigung derselben durch Überhitzung nahezu ausgeschlossen.

## Patentansprüche

1. Abgasbehandlungsanordnung, insbesondere für eine Abgasanlage einer Brennkraftmaschine eines Fahrzeugs, umfassend ein in Richtung einer Gehäuselängsachse (L) langgestrecktes Gehäuse (12), eine in dem Gehäuse (12) angeordnete Abgasbehandlungseinheit (18) sowie wenigstens eine mit einem axial offenen axialen Endbereich (16) des Gehäuses (12) in Strömungsverbindung stehende erste Abgasführungsanordnung (24), wobei die erste Abgasführungsanordnung (24) einen entlang einer Außenseite (22) des Gehäuses (12) führenden ersten Strömungswegbereich (38) sowie einen den ersten Strömungswegbereich (38) mit dem axial offenen axialen Endbereich (16) des Gehäuses (12) verbindenden zweiten Strömungswegbereich (47) bereitstellt, wobei der erste Strömungswegbereich (38) einen im axialen Bereich des axial offenen axialen Endbereichs (16) des Gehäuses (12) angeordneten ersten axialen Endbereich (40) aufweist, wobei die Abgasführungsanordnung (24) ein an der Außenseite (22) des Gehäuses (12) angeordnetes erstes Abgasführungselement (26) umfasst, wobei der erste Strömungswegbereich (38) durch das erste Abgasführungselement (26) wenigstens bereichsweise begrenzt ist,
**dadurch gekennzeichnet,**
**dass** ein den axial offenen axialen Endbereich (16) des Gehäuses (12) abschließendes und den zweiten Strömungswegbereich (47) wenigstens bereichsweise begrenzendes, haubenartiges drittes Strömungsführungselement (46) vorgesehen ist, und
**dass** das dritte Strömungsführungselement (46) in einem Umfangsbereich des Gehäuses (12) zur Verbindung des zweiten Strömungswegbereichs (47) mit dem ersten axialen Endbereich (40) des ersten Strömungswegbereichs (38) nach radial außen über das Gehäuse (12) hervorsteht und das erste Abgasführungselement (26) und den axial offenen axialen Endbereich (16) des Gehäuses (12) radial überdeckt.

2. Abgasbehandlungsanordnung nach Anspruch 1, **dadurch gekennzeichnet, dass** der erste Strömungswegbereich (38) im Wesentlichen in Richtung der Gehäuselängsachse (L) entlang der Außenseite (22) des Gehäuses (12) geführt ist, oder/und dass der erste Strömungswegbereich (38) einen axial im Bereich eines anderen axialen Endbereichs (14) des Gehäuses (12) angeordneten zweiten axialen Endbereich (42) aufweist.

3. Abgasbehandlungsanordnung nach Anspruch 1 oder 2, **dadurch gekennzeichnet, dass** das erste Abgasführungselement (26) an der Außenseite (22) des Gehäuses (12) festgelegt ist, und dass der erste Strömungswegbereich (38) im Wesentlichen durch das erste Abgasführungselement (26) und das Gehäuse (12) begrenzt ist.

4. Abgasbehandlungsanordnung nach Anspruch 1 oder 2, **dadurch gekennzeichnet, dass** an der Außenseite (22) des Gehäuses (12) ein zweites Abgasführungselement (30) festgelegt ist, dass das erste Abgasführungselement (26) an dem zweiten Abgasführungselement (30) oder/und der Außenseite (22) des Gehäuses (12) festgelegt ist, und dass der erste Strömungswegbereich (38) im Wesentlichen durch das erste Abgasführungselement (26) und das zweite Abgasführungselement (30) begrenzt ist.

5. Abgasbehandlungsanordnung nach Anspruch 2 oder einem der Ansprüche 3 oder 4, sofern auf Anspruch 2 rückbezogen, **dadurch gekennzeichnet, dass** ein im zweiten axialen Endbereich (42) des ersten Strömungswegbereichs (38) in den ersten Strömungswegbereich (38) einmündendes Strömungsführungsrohr (44) vorgesehen ist.

6. Abgasbehandlungsanordnung nach einem der vorangehenden Ansprüche, **dadurch gekennzeichnet, dass** das Gehäuse (12) zwei axial offene axiale Endbereiche (14, 16) aufweist, und dass in Zuordnung zu wenigstens einem der beiden axialen Endbereiche (14, 16) des Gehäuses (12) eine mit diesem axialen Endbereich (14) in Strömungsverbindung stehende erste Abgasführungsanordnung (24) vorgesehen ist.

7. Abgasbehandlungsanordnung nach Anspruch 6, **dadurch gekennzeichnet, dass** in Zuordnung zu einem der beiden axialen Endbereiche (14,16) des Gehäuses (12) eine zweite Abgasführungsanordnung (49) vorgesehen ist, wobei die zweite Abgasführungsanordnung (49) ein diesen axialen Endbereich (14) des Gehäuses (12) abschließendes, vorzugsweise im Wesentlichen trichterartiges viertes Strömungsführungselement (50) umfasst.

8. Abgasbehandlungsanordnung nach Anspruch 6 oder 7, **dadurch gekennzeichnet, dass** die erste Abgasführungsanordnung (24) stromaufwärts der Abgasbehandlungseinheit (18) angeordnet ist, und dass die zweite Abgasführungsanordnung (49) stromabwärts der Abgasbehandlungseinheit (18) angeordnet ist.

9. Abgasbehandlungsanordnung nach Anspruch 6 oder 7, **dadurch gekennzeichnet, dass** die erste Abgasführungsanordnung (24) stromabwärts der Abgasbehandlungseinheit (18) angeordnet ist, und dass die zweite Abgasführungsanordnung (49) stromaufwärts der Abgasbehandlungseinheit (18) angeordnet ist.

10. Abgasbehandlungsanordnung nach einem der Ansprüche 1-6, **dadurch gekennzeichnet, dass** in Zuordnung zu jedem der axialen Endbereiche (14, 16) des Gehäuses (12) jeweils eine mit diesem in Strömungsverbindung stehende erste Abgasführungsanordnung (24) vorgesehen ist.

11. Abgasbehandlungsanordnung nach einem der vorangehenden Ansprüche, **dadurch gekennzeichnet, dass** die Abgasbehandlungseinheit (18) eine Katalysatorbaugruppe oder/und eine Partikelfilterbaugruppe umfasst.

12. Abgasanlage für eine Brennkraftmaschine eines Fahrzeugs, umfassend eine in einer Abgasströmungsrichtung durchströmbare Abgasbehandlungsanordnung (10) nach einem der vorangehenden Ansprüche.

## Claims

1. Exhaust gas treatment device, especially for an exhaust system of an internal combustion engine of a vehicle, comprising a housing (12) elongated in the direction of a housing longitudinal axis (L), an exhaust gas treatment unit (18) arranged in the housing (12) as well as at least one first exhaust gas guiding device (24), which is in flow connection with an axially open axial end area (16) of the housing (12), wherein the first exhaust gas guiding device (24) provides a first flow path area (38) extending along an outer side (22) of the housing (12) as well as a second flow path area (47) connecting the first flow path area (38) to the axially open axial end area (16) of the housing (12), wherein the first flow path area (38) has a first axial end area (40) arranged in the axial area of the axially open axial end area (16) of the housing (12), wherein the exhaust gas guiding device (24) comprises a first exhaust gas guide element (26) arranged on the outer side (22) of the housing (12), wherein the first flow path area (38) is defined by the first exhaust gas guide element (26) in at least some areas,
**characterized in that**
a hood-like third flow guide element (46), which closes the axially open axial end area (16) of the housing (12) and defines the second flow path area (47) in at least some areas is provided, and
that the third flow guide element (46) projects radially outwardly over the housing (12) in a circumferential area of the housing (12) for connecting the second flow path area (47) to the first axial end area (40) of the first flow path area (38) and radially overlaps the first exhaust gas guide element (26) and the axially open axial end area (16) of the housing (12).

2. Exhaust gas treatment device in accordance with claim 1, **characterized in that** the first flow path area (38) is guided essentially in the direction of the housing longitudinal axis (L) along the outer side (22) of the housing (12), or/and that the first flow path area (38) has a second axial end area (42) arranged axially in the area of another axial end area (14) of the housing (12).

3. Exhaust gas treatment device in accordance with claim 1 or 2, **characterized in that** the first exhaust gas guide element (26) is fixed on the outer side (22) of the housing (12) and that the first flow path area (38) is defined essentially by the first exhaust gas guide element (26) and the housing (12).

4. Exhaust gas treatment device in accordance with claim 1 or 2, **characterized in that** a second exhaust gas guide element (30) is fixed on the outer side (22) of the housing (12), that the first exhaust gas guide element (26) is fixed on the second exhaust gas guide element (30) or/and on the outer side (22) of the housing (12), and that the first flow path area (38) is defined essentially by the first exhaust gas guide element (26) and the second exhaust gas guide element (30).

5. Exhaust gas treatment device in accordance with claim 2 or one of the claims 3 or 4, if referred back to claim 2, **characterized in that** a flow guide pipe (44) opening into the first flow path area (38) in the second axial end area (42) of the first flow path area (38) is provided.

6. Exhaust gas treatment device in accordance with one of the above claims, **characterized in that** the housing (12) has two axially open axial end areas (14, 16), and that in association with at least one of the two axial end areas (14, 16) of the housing (12), a first exhaust gas guiding device (24) that is in flow connection with this axial end area (14) is provided.

7. Exhaust gas treatment device in accordance with claim 6, **characterized in that** in association with one of the two axial end areas (14, 16) of the housing (12), a second exhaust gas guiding device (49) is provided, wherein the second exhaust gas guiding device (49) comprises a preferably essentially funnel-shaped fourth flow guide element (50) closing this axial end area (14) of the housing (12).

8. Exhaust gas treatment device in accordance with claim 6 or 7, **characterized in that** the first exhaust gas guiding device (24) is arranged upstream of the exhaust gas treatment unit (18) and that the second exhaust gas guiding device (49) is arranged downstream of the exhaust gas treatment unit (18).

9. Exhaust gas treatment device in accordance with claim 6 or 7, **characterized in that** the first exhaust gas guiding device (24) is arranged downstream of the exhaust gas treatment unit (18) and that the second exhaust gas guiding device (49) is arranged upstream of the exhaust gas treatment unit (18).

10. Exhaust gas treatment device in accordance with one of the claims 1-6, **characterized in that** in association with each of the axial end areas (14, 16) of the housing (12), a respective first exhaust gas guiding device (24) that is in flow connection with this is provided.

11. Exhaust gas treatment device in accordance with one of the above claims, **characterized in that** the exhaust gas treatment unit (18) comprises a catalytic converter assembly unit or/and a particle filter assembly unit.

12. Exhaust system for an internal combustion engine of a vehicle, comprising an exhaust gas treatment device (10) through which flow is possible in an exhaust gas flow direction in accordance with one of the above claims.

## Revendications

1. Dispositif de traitement de gaz d'échappement, en particulier pour un système d'échappement d'un moteur à combustion interne d'un véhicule, comprenant un boîtier (12) allongé dans la direction d'un axe longitudinal de boîtier (L), une unité de traitement de gaz d'échappement (18) disposée dans le boîtier (12) ainsi qu'au moins un premier dispositif de guidage de gaz d'échappement (24), qui est en liaison d'écoulement avec une zone d'extrémité axiale (16) du boîtier (12), ouverte axialement, dans lequel le premier dispositif de guidage de gaz d'échappement (24) fournit une première zone de voie d'écoulement (38) s'étendant le long d'un côté extérieur (22) du boîtier (12) ainsi qu'une seconde zone de voie d'écoulement (47) reliant la première zone de voie d'écoulement (38) à la zone d'extrémité axiale (16) ouverte axialement du boîtier (12), dans lequel la première zone de voie d'écoulement (38) comprend une première zone d'extrémité axiale(40) disposée dans la zone axiale de la zone d'extrémité axiale (16) axialement ouverte, le dispositif de guidage de gaz d'échappement (24) comprenant un premier élément de guidage de gaz d'échappement (26) disposé sur le côté extérieur (22) du boîtier (12), la première zone de voie d'écoulement (38) étant définie par le premier élément de guidage de gaz d'échappement (26) dans au moins certaines zones,
caractérisé en ce
il est prévu un troisième élément de guidage d'écoulement (46) en forme de capot, qui ferme la zone d'extrémité axiale (16) du boîtier (12) ouverte axialement et définit la deuxième zone de voie d'écoulement (47) dans au moins certaines zones, et que le troisième élément de guidage d'écoulement (46) fait saillie radialement vers l'extérieur sur le boîtier (12) dans une zone périphérique du boîtier (12) pour relier la deuxième zone de voie d'écoulement (47) à la première zone d'extrémité axiale (40) de la première zone de voie d'écoulement (38) et recouvre radialement le premier élément de guidage de gaz d'échappement (26) et la zone d'extrémité axiale (16) du boîtier (12) ouverte axialement.

2. Dispositif de traitement de gaz d'échappement selon la revendication 1, **caractérisé en ce que** la première zone de voie d'écoulement (38) est guidée essentiellement dans la direction de l'axe longitudinal (L) du boîtier le long du côté extérieur (22) du boîtier (12), ou/et **en ce que** la première zone de voie d'écoulement (38) présente une deuxième zone d'extrémité axiale (42) disposée axialement dans la région d'une autre zone d'extrémité axiale (14) du boîtier (12).

3. Dispositif de traitement de gaz d'échappement selon la revendication 1 ou 2, **caractérisé en ce que** le premier élément de guidage de gaz d'échappement (26) est fixé sur le côté extérieur (22) du boîtier (12) et que la première zone de voie d'écoulement (38) est définie essentiellement par le premier élément de guidage de gaz d'échappement (26) et le boîtier (12).

4. Dispositif de traitement de gaz d'échappement selon la revendication 1 ou 2, **caractérisé en ce qu'**un deuxième élément de guidage de gaz d'échappement (30) est fixé sur le côté extérieur (22) du boîtier (12), **en ce que** le premier élément de guidage de gaz d'échappement (26) est fixé sur le deuxième élément de guidage de gaz d'échappement (30) et/ou sur le côté extérieur (22) du boîtier (12), et **en ce que** la première zone de voie d'écoulement (38) est définie essentiellement par le premier élément de guidage de gaz d'échappement (26) et le deuxième élément de guidage de gaz d'échappement (30).

5. Dispositif de traitement de gaz d'échappement selon la revendication 2 ou selon l'une des revendications 3 ou 4, si l'on se réfère à la revendication 2, **caractérisé en ce qu'**il est prévu un tube de guidage d'écoulement (44) qui débouche dans la première zone de voie d'écoulement (38) dans la deuxième zone d'extrémité axiale (42) de la première zone de voie d'écoulement (38).

6. Dispositif de traitement de gaz d'échappement selon l'une des revendications ci-précédentes, **caractérisé en ce que** le boîtier (12) présente deux zones d'extrémité axiales (14, 16) ouvertes axialement, et **en ce qu'**en association à au moins une des deux zones d'extrémité axiales (14, 16) du boîtier (12), il est prévu un premier dispositif de guidage de gaz d'échappement (24) qui est en liaison d'écoulement avec cette zone d'extrémité axiale (14).

7. Dispositif de traitement de gaz d'échappement selon la revendication 6, **caractérisé en ce qu'**en association à l'une des deux zones d'extrémité axiales (14, 16) du boîtier (12), il est prévu un deuxième dispositif de guidage de gaz d'échappement (49), le deuxième dispositif de guidage de gaz d'échappement (49) comprenant un quatrième élément de guidage d'écoulement (50), de préférence essentiellement en forme d'entonnoir, qui ferme cette zone d'extrémité axiale (14) du boîtier (12).

8. Dispositif de traitement de gaz d'échappement selon la revendication 6 ou 7, **caractérisé en ce que** le premier dispositif de guidage de gaz d'échappement (24) est disposé en amont de l'unité de traitement de gaz d'échappement (18) et que le deuxième dispositif de guidage de gaz d'échappement (49) est disposé en aval de l'unité de traitement de gaz d'échappement (18).

9. Dispositif de traitement de gaz d'échappement selon la revendication 6 ou 7, **caractérisé en ce que** le premier dispositif de guidage de gaz d'échappement (24) est disposé en aval de l'unité de traitement de gaz d'échappement (18) et que le deuxième dispositif de guidage de gaz d'échappement (49) est disposé en amont de l'unité de traitement de gaz d'échappement (18).

10. Dispositif de traitement de gaz d'échappement selon l'une des revendications 1 à 6, **caractérisé en ce qu'**en association avec chacune des zones d'extrémité axiales (14, 16) du boîtier (12), il est prévu un premier dispositif de guidage de gaz d'échappement (24) respectif qui est en liaison d'écoulement avec celui-ci.

11. Dispositif de traitement de gaz d'échappement selon l'une des revendications ci-dessus, **caractérisé en ce que** l'unité de traitement de gaz d'échappement (18) comprend une unité d'assemblage de convertisseur catalytique et/ou une unité d'assemblage de filtre à particules.

12. Système d'échappement pour un moteur à combustion interne d'un véhicule, comprenant un dispositif de traitement de gaz d'échappement (10) à travers lequel un écoulement est possible dans une direction d'écoulement de gaz d'échappement conformément à l'une des revendications précédentes.
